(19) Europäisches Patentamt
European Patent Office
Office européen des brevets

(11) **EP 4 682 374 A1**

(12) **EUROPEAN PATENT APPLICATION**

(43) Date of publication:
**21.01.2026 Bulletin 2026/04**

(21) Application number: **24213891.5**

(22) Date of filing: **19.11.2024**

(51) International Patent Classification (IPC):
**F02M 35/12** (2006.01)

(52) Cooperative Patent Classification (CPC):
**F02M 35/1255; F02M 35/1261**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.07.2024 KR 20240094031**

(71) Applicant: **Doosan Bobcat Korea Co., Ltd.**
**Incheon 22503 (KR)**

(72) Inventors:
• **PARK, Sungryong**
**22503 Incheon (KR)**
• **WON, Jongsik**
**22503 Incheon (KR)**

(74) Representative: **Studio Torta S.p.A.**
**Via Viotti, 9**
**10121 Torino (IT)**

Remarks:
Amended claims in accordance with Rule 137(2) EPC.

(54) **FORKLIFT NOISE REDUCTION DEVICE AND METHOD OF REDUCING NOISE**

(57) Disclosed are a forklift noise reduction device and a method of reducing noise. The forklift noise reduction device according to the present embodiment includes a cavity provided inside a frame of a forklift and a connecting tube of which one end communicates with an intake pipe of an engine and the other end communicates with the cavity, wherein a length of the connecting tube may be calculated from a volume of the cavity that to derive the same resonance frequency as a noise frequency of the forklift.

FIG. 1

## Description

CROSS-REFERENCE TO RELATED APPLICATION.

This application claims the benefit of Korean Patent Application No. 1 0-2024-0094031, filed on July 16, 2024 in the Korean Intellectual Property Office, the disclosure of which is incorporated herein by reference.

BACKGROUND

1. Field

Embodiments of the present disclosure relate to a forklift noise reduction device and a method of reducing noise, and more specifically, to a forklift noise reduction device capable of reducing noise generated due to intake of an engine of a forklift, and a method of reducing noise.

2. Description of the Related Art

In general, since a target frequency of a resonator applied to a vehicle is high, a volume of the resonator is relatively small.

Forklifts are apparatuses that are widely used at various industrial sites and are mainly used to load or unload heavy objects or move heavy objects from one location to another location.

In such a forklift, since a target frequency is relatively lower than that of a vehicle, a resonator with a large volume (3 to 5 liters or more) is required. For example, in the case of 2400 revolutions per minute (RPM) of a general 4-cylinder engine, a target frequency may be about 80 Hz in consideration of characteristics and an operating RPM of the engine.

However, in the case of a forklift of which a vehicle size is important, since remaining space of an engine room is insufficient, there is a problem in applying an intake resonator.

In addition, in the case of the conventional forklift, since an intake port which is a main noise source is provided in an overhead guard (OVHG) and is close to a driver's seat, there is a problem of transmitting loud noise to a driver of the forklift.

SUMMARY

Therefore, it is one aspect of the present disclosure to provide a forklift noise reduction device capable of reducing noise using a cavity generated in a metal pipe product in a frame of a forklift, and a method of reducing noise.

It is another aspect of the present disclosure to provide a forklift noise reduction device in which an intake port, which is a main noise source, is far away from a driver to reduce noise, and a method of reducing noise.

In accordance with one aspect of the present disclosure, a forklift noise reduction device includes a cavity provided inside a frame of a forklift and a connecting tube of which one end communicates with an intake pipe of an engine and the other end communicates with the cavity, wherein a length of the connecting tube is calculated from a volume of the cavity that to derive the same resonance frequency as a noise frequency of the forklift.

The resonance frequency may be

$$f_{\text{resonance}} = \frac{v}{2\pi}\sqrt{\frac{A}{VL}} \ [\text{Hz}]$$

, wherein $f_{\text{resonance}}$ may be the resonance frequency, v may be a speed of sound, A may be a cross-sectional area of the connecting tube, V may be the volume of the cavity, and L may be the length of the connecting tube.

The length of the connecting tube may be formed in reverse proportion to the volume of the cavity.

The forklift noise reduction device may further include a sound absorbing member provided on one side of the cavity.

The forklift noise reduction device may further include a case installed in the cavity and provided with an inner space.

The forklift noise reduction device may further include a noise measurement device configured to measure the noise frequency of the forklift.

The forklift noise reduction device may further include an intake port formed to pass through the frame so that the cavity communicates with the outside.

In accordance with another aspect of the present disclosure, a method of reducing noise of a forklift includes finding a cavity in a frame of a forklift, measuring a volume of the cavity, fixing one end portion of a connecting tube to the frame so that the one end portion communicates with the cavity, and cutting the connecting tube according to the volume of the cavity and connecting the other end portion of the connecting tube to an intake pipe of an engine.

The connecting of the other end portion of the connecting tube to the intake pipe of the engine may include measuring a noise frequency of the forklift, calculating a length of the connecting tube from the volume of the cavity that to derive the same resonance frequency as the noise frequency, cutting the connecting tube, and connecting the other end portion of the cut connecting tube to the intake pipe.

In the calculating of the length of the connecting tube, the resonance frequency may be

$$f_{\text{resonance}} = \frac{v}{2\pi}\sqrt{\frac{A}{VL}} \ [\text{Hz}]$$

, wherein $f_{\text{resonance}}$ may be the resonance frequency, v may be a speed of sound, A ay be a cross-sectional area of the connecting tube, V may be the volume of the cavity, and L may be the length of the connecting tube.

The length of the connecting tube may be formed in reverse proportion to the volume of the cavity.

The method may further include installing a sound absorbing member on one side of the cavity.

The method may further include inserting a case provided with an inner space into the cavity.

The method may further include forming an intake port communicating with the outside in the cavity.

BRIEF DESCRIPTION OF THE DRAWINGS

These and/or other aspects of the disclosure will become apparent and more readily appreciated from the following description of the embodiments, taken in conjunction with the accompanying drawings of which:

FIG. 1 is a perspective view illustrating a forklift noise reduction device according to a first embodiment of the present disclosure;

FIG. 2 is a perspective view illustrating a forklift noise reduction device according to a second embodiment of the present disclosure;

FIGS. 3 to 6 are flowcharts illustrating a method of reducing noise of a forklift according to an embodiment of the present disclosure; and

FIG. 7 is a flowchart illustrating connection of the other end portion of the connecting tube to an intake pipe of an engine in the method of reducing noise of a forklift according to the embodiment of the present disclosure.

DETAILED DESCRIPTION

Hereinafter, embodiments of the present disclosure will be described in detail with reference to the accompanying drawings. The following embodiments are provided to sufficiently convey the spirit of the present disclosure to those skilled in the art. The present disclosure is not limited to the embodiments disclosed herein and may be implemented in different forms. In the drawings, portions which are not related to the description may be omitted to clarify the present disclosure, and sizes of components may be slightly exaggerated to facilitate understanding of the present disclosure.

In a 1/3 octave noise-frequency spectrum, since a value of intake noise in the 80 Hz band is greater than that of surrounding frequency bands, a driver feels uncomfortable. In general, in the case of a target frequency of about 80 Hz, a resonator of 3 to 5 liters or more is required, but since there is no usable space in an engine room, it is difficult to apply the resonator for reducing intake noise.

A forklift noise reduction device 10 according to the present disclosure may reduce intake noise by connecting a cavity 100 provided inside a frame 20 of a forklift to an intake pipe 31 of an engine 30 through a connecting tube 200.

In this case, the engine 30 may be installed outside the frame 20, and the cavity 100 which is a space formed by a metal pipe product may be provided in the frame 20.

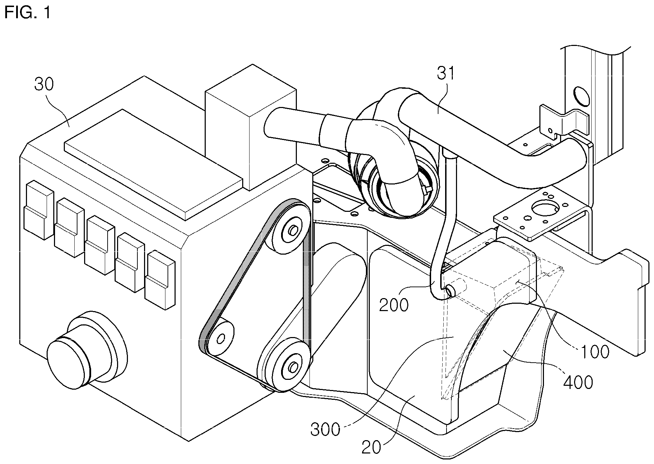

Referring to FIG. 1, a forklift noise reduction device 10 according to a first embodiment of the present disclosure may include a cavity 100 and a connecting tube 200.

The cavity 100 may be provided inside a frame 20 of a forklift. In addition, the cavity 100 may be a space formed in the frame 20

One end of the connecting tube 200 may communicate with the intake pipe 31 of the engine 30, and the other end may communicate with the cavity 100. In addition, the connecting tube 200 may be provided as a tube having a constant cross-sectional area. In addition, the connecting tube 200 may be provided to be bent or curved.

In addition, the connecting tube 200, together with the cavity 100, may reduce noise of a frequency band corresponding to a resonance frequency through the Helmholtz resonance theory.

In addition, a length of the connecting tube 200 may be calculated from a volume of the cavity 100 that to derive the same resonance frequency as a noise frequency of the forklift.

In addition, the forklift noise reduction device 10 according to the first embodiment of the present disclosure may include a noise measurement device. In addition, the noise measurement device may measure a noise frequency of the forklift.

In this case, a resonance frequency may be expressed as in the following Equation 1 according to the Helmholtz resonance theory.

[Equation 1]

$$f_{\text{resonance}} = \frac{v}{2\pi}\sqrt{\frac{A}{VL}} \ [\text{Hz}]$$

Here, $f_{\text{resonance}}$ is the resonance frequency, v is the speed of sound, A is a cross-sectional area of the connecting tube 200, V is the volume of the cavity 100, and L is the length of the connecting tube 200.

In addition, the length of the connecting tube 200 may be formed in reverse proportion to the volume of the cavity 100. Accordingly, when the volume of the cavity 100 is small, the length of the connecting tube 200 may be long, and when the volume of the cavity 100 is large, the length of the connecting tube 200 may be small.

The forklift noise reduction device 10 according to the first embodiment of the present disclosure may further include a sound absorbing member 300 and a case 400.

The sound absorbing member 300 may be provided on one side of the cavity 100 and may absorb noise. In addition, the sound absorbing member 300 may be formed of a material that easily absorbs sound such as fiber insulation, glass fiber, felt, or the like. In addition, the sound absorbing member 300 may be provided to surround the entire cavity 100.

The case 400 may be installed in the cavity 100 and provided with an inner space. In addition, when the volume of the cavity 100 is large, the case 400 may be used to restrict the volume of the cavity 100. As an example, when the volume of the cavity 100 is 6 liters, the volume of the cavity 100 may be restricted by installing the case 400 provided with the inner space of 5 liters in the cavity 100. In other words, when the case 400 is installed, the volume of the cavity 100 in Equation 1 may be changed to the inner space of the case 400. In addition, the length of the connecting tube 200 may be changed according to a volume of the inner space of the case 400. More specifically, as the volume of the inner space of the case 400 decreases, the length of the connecting tube 200 may increase. In addition, the other end of the connecting tube 200 may communicate with the inner space of the case 400.

In addition, the sound absorbing member 300 may be provided on one side of the case 400 or provided to surround the entire case 400.

Hereinafter, a forklift noise reduction device 10 according to a second embodiment of the present disclosure will be described.

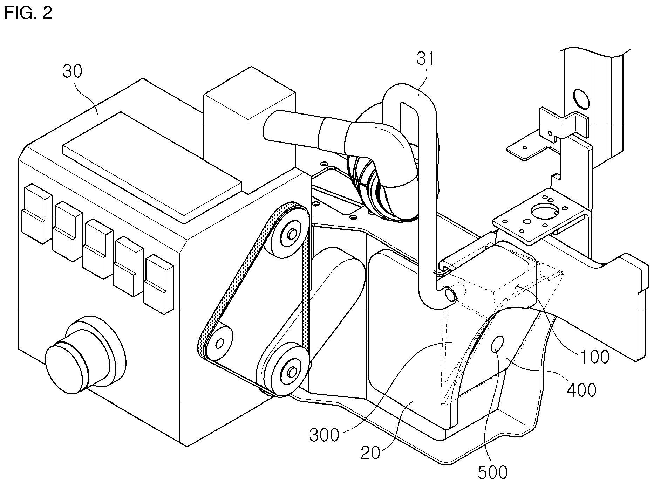

FIG. 2 is a perspective view illustrating the forklift noise reduction device 10 according to the second embodiment of the present disclosure, and referring to FIG. 2, the forklift noise reduction device 10 according to the second embodiment of the present disclosure includes a cavity 100, a connecting tube 200, a noise measurement device, a sound absorbing member 300, a case 400, and an intake port 500.

Since a description of the second embodiment of the present disclosure other than content additionally described with reference to these separate reference numerals in description of the second embodiment is the same as the above description of the forklift noise reduction device 10 according to the first embodiment of the present disclosure, the description will be omitted in order to prevent duplication of content.

The intake port 500 may be formed to pass through a frame 20 so that the cavity 100 communicates with the outside. Accordingly, air introduced into an engine 30 may be introduced into an intake pipe 31 from the intake port 500 through the cavity 100 and the connecting tube 200.

Accordingly, since the intake port 500 is formed in the frame 20 so that the cavity 100 communicates with the outside, the intake port 500 is located far away from a driver's seat, and thus noise transferred to a forklift driver can be reduced.

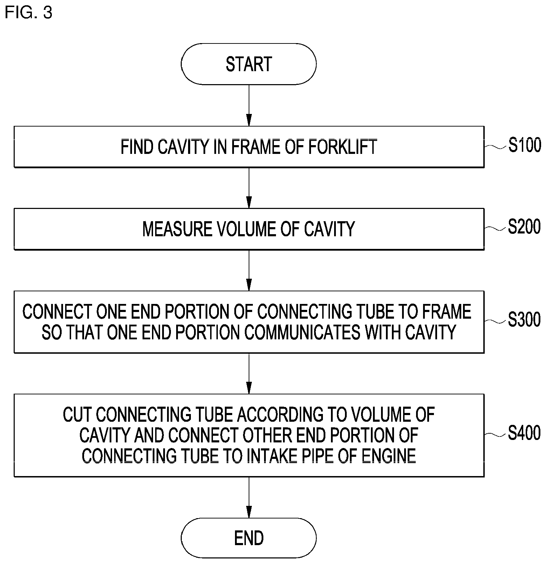

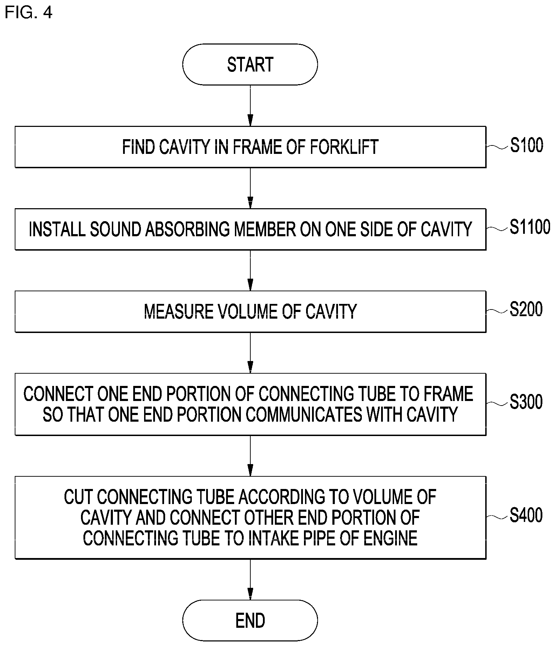

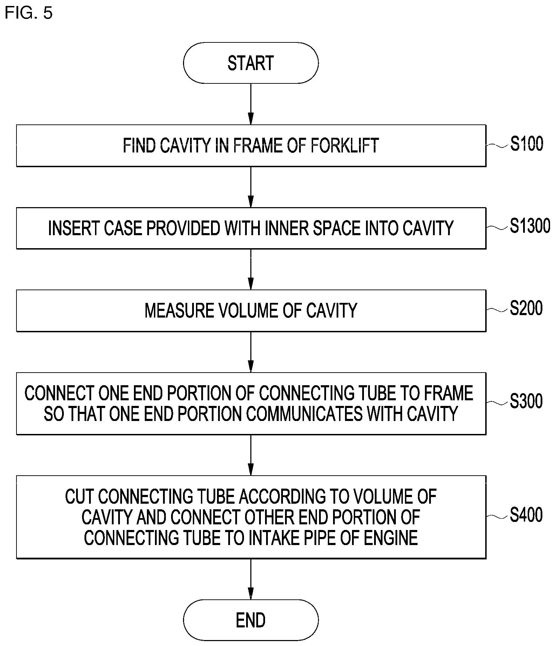

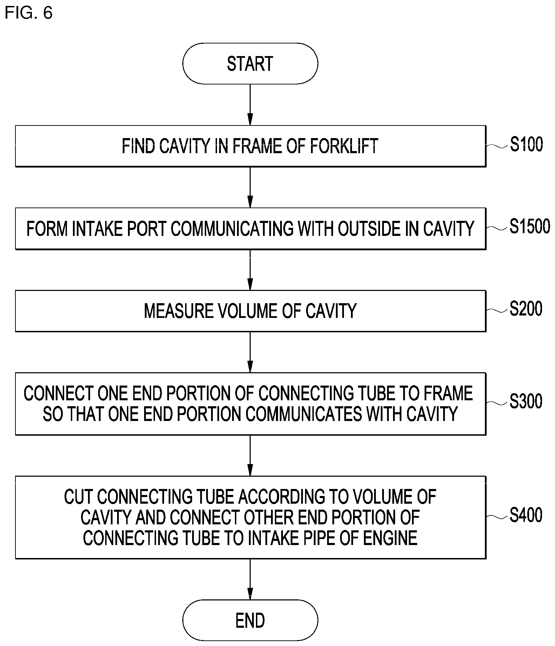

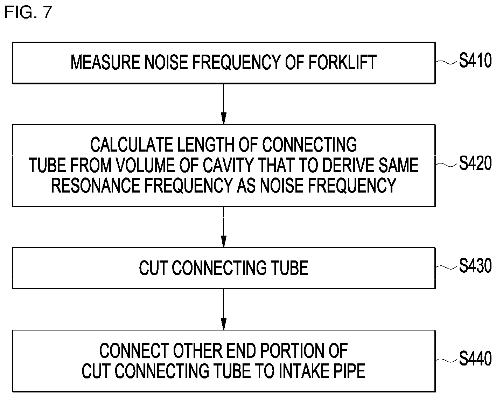

Hereinafter, a method of reducing noise of a forklift of the present disclosure will be described with reference to FIGS. 3 to 7.

The method of reducing noise of a forklift of the present disclosure may include finding a cavity in a frame of a forklift (S100), measuring a volume of the cavity (S200), fixing one end portion of a connecting tube to the frame so that the one end portion communicates with the cavity (S300), and cutting the connecting tube according to the volume of the cavity and connecting the other end portion of the connecting tube to an intake pipe of an engine (S400).

In operation S100 of finding the cavity in the frame of the forklift, a cavity 100 provided inside a frame 20 of the forklift may be found. In this case, the cavity 100 may be a space formed in the frame 20.

In operation S200 of measuring the volume of the cavity, a volume of the cavity 100 may be measured. In this case, a length of a connecting tube 200 may be changed according to the volume of the cavity 100.

In operation S300 of fixing the one end portion of the connecting tube to the frame so that the one end portion communicates with the cavity, the one end portion of the connecting tube 200 may be fixed to the frame 20. In addition, the cavity 100 may communicate with the connecting tube 200. Accordingly, noise may be transferred from the connecting tube 200 to the cavity 100, or transferred from the cavity 100 to the connecting tube 200.

In operation S400 of cutting the connecting tube according to the volume of the cavity and connecting the other end portion of the connecting tube to the intake pipe of the engine, the connecting tube 200 may be cut according to the volume of the cavity 100, and the other end portion of the connecting tube 200 may be connected to an intake pipe 31 of an engine 30.

In addition, the connecting of the other end portion of the connecting tube 200 to the intake pipe 31 of the engine 30 may include measuring a noise frequency of the forklift (S410), calculating a length of the connecting tube from the volume of the cavity that to derive the same resonance frequency as the noise frequency (S420), cutting the connecting tube (S430), and connecting the other end portion of the connecting tube to the intake pipe (S440).

In operation S410 of measuring the noise frequency of the forklift, the noise frequency of the forklift may be measured through a noise measurement device.

In operation S420 of calculating the length of the connecting tube from the volume of the cavity that to derive the same resonance frequency as the noise frequency, the length of the connecting tube 200 may be calculated using the volume of the cavity 100 to derive the resonance frequency, which is derived through the Helmholtz resonance theory, to be the same as the noise frequency. In this case, the length of the connecting tube 200 may be derived by substituting the noise frequency and a value of the volume of the cavity 100 into Equation 1. In this case, the length of the connecting tube 200 may be formed in reverse proportion to the volume of the cavity 100.

In operation S430 of cutting the connecting tube, the connecting tube 200 may be cut to have a length calculated in the operation of the calculating the length of the connecting tube 200.

In operation S440 of connecting the other end portion of the cut connecting tube to the intake pipe, the other end portion of the connecting tube 200 may be connected to the intake pipe 31, and the method of reducing noise of a forklift may be completed.

The method of reducing noise of a forklift of the present disclosure may further include installing a sound absorbing member on one side of the cavity (S1100), inserting a case provided with an inner space into the cavity (S1300), and forming an intake port communicating with the outside in the cavity (S1500).

Operation S1100 of installing the sound absorbing member on one side of the cavity may be performed between operation S100 of finding the cavity in the frame of the forklift and operation S200 of measuring the volume of the cavity.

In addition, in operation S1100 of installing the sound absorbing member on one side of the cavity, a sound absorbing member 300 may be installed on one side of the cavity 100. In addition, the sound absorbing member 300 may be installed to surround the entire cavity 100.

Operation S1300 of inserting the case provided with the inner space into the cavity may be performed between operation S100 of finding the cavity in the frame of the forklift and operation S200 of measuring the volume of the cavity.

In addition, in operation S1300 of inserting the case provided with the inner space into the cavity, a case 400 provided with an inner space may be inserted into the cavity 100. In addition, operation S1100 of installing the sound absorbing member on one side of the cavity may be performed after operation S1300 of inserting the case provided with the inner space into the cavity. In this case, in operation S1100 of installing the sound absorbing member on one side of the cavity, the sound absorbing member 300 may be installed on an outer circumferential surface or inner circumferential surface of the case 400.

Operation S1500 of forming the intake port communicating with the outside in the cavity may be performed between operation S100 of finding the cavity in the frame of the forklift and operation S200 of measuring the volume of the cavity.

In operation S1500 of forming the intake port communicating with the outside in the cavity, an intake port 500 communicating with the outside may be formed in the cavity 100. In this case, the intake port 500 may be formed in the frame 20.

As described above, the forklift noise reduction device 10 according to the present embodiment can reduce intake noise of the forklift through the Helmholtz resonance theory using the cavity 100 and the connecting tube 200 provided inside the frame 20 of the forklift.

In the forklift noise reduction device 10 according to the present embodiment, since the intake port 500 is formed in the frame 20 so that the cavity 100 communicates with the outside, the intake port 500 is located far away from a driver's seat, and thus noise transferred to a forklift driver can be reduced.

The method of reducing noise of a forklift according to the present embodiment can reduce intake noise of the forklift through the Helmholtz resonance theory using the cavity 100 and the connecting tube 200 provided inside the frame 20 of the forklift.

In the method of reducing noise of a forklift according to the present disclosure, since the intake port 500 communicating with the outside is formed in the cavity 100, the intake port 500 is located far away from the driver's seat, and thus noise transferred to the forklift driver can be reduced.

A forklift noise reduction device according to the present embodiment has an effect of reducing intake noise of a forklift through the Helmholtz resonance theory using a cavity and a connecting tube provided inside a frame of the forklift.

A forklift noise reduction device according to the present embodiment has an effect of reducing intake noise transferred to a driver of a forklift because an intake port is formed in a frame so that a cavity communicates with the outside, and is located far away from a driver's seat.

A method of reducing noise of a forklift according to the present embodiment has an effect of reducing intake noise of a forklift through the Helmholtz resonance theory using a cavity and a connecting tube provided inside a frame of the forklift.

A method of reducing noise of a forklift according to the present embodiment has an effect of reducing intake noise transferred to a driver of a forklift because an intake port is formed in a frame so that a cavity communicates with the outside, and is located far away from a driver's seat.

**Claims**

1. A forklift noise reduction device (10) comprising:

   a cavity (100) provided inside a frame (20) of a forklift; and
   a connecting tube (200) of which one end communicates with an intake pipe (31) of an engine (30) and the other end communicates with the cavity (100),
   wherein a length of the connecting tube (200) is calculated from a volume of the cavity (100) that to derive the same resonance frequency as a noise frequency of the forklift.

2. The forklift noise reduction device (10) of claim 1, wherein the resonance frequency is

$$f_{\text{resonance}} = \frac{v}{2\pi}\sqrt{\frac{A}{VL}} \ [\text{Hz}]$$
,

wherein $r_{\text{esonance}}$ is the resonance frequency, v is a speed of sound, A is a cross-sectional area of the connecting tube (200), V is the volume of the cavity (100), and L is the length of the connecting tube (200).

**3.** The forklift noise reduction device (10) of claim 1 or 2, wherein the length of the connecting tube (200) is formed in reverse proportion to the volume of the cavity (100).

**4.** The forklift noise reduction device (10) of claim 1, 2 or 3, further comprising a sound absorbing member (300) provided on one side of the cavity (100).

**5.** The forklift noise reduction device (10) of any one of claims from 1 to 4, further comprising a case (400) installed in the cavity (100) and provided with an inner space.

**6.** The forklift noise reduction device (10) of any one of claims from 1 to 5, further comprising a noise measurement device configured to measure the noise frequency of the forklift.

**7.** The forklift noise reduction device (10) of any one of claims from 1 to 6, further comprising an intake port (500) formed to pass through the frame (20) so that the cavity (100) communicates with an outside.

**8.** A method of reducing noise of a forklift, comprising:

finding a cavity (100) in a frame (20) of a forklift;
measuring a volume of the cavity (100);
fixing one end portion of a connecting tube (200) to the frame (20) so that the one end portion communicates with the cavity (100); and
cutting the connecting tube (200) according to the volume of the cavity (100) and connecting the other end portion of the connecting tube (200) to an intake pipe (31) of an engine (30).

**9.** The method of claim 8, wherein the connecting of the other end portion of the connecting tube (200) to the intake pipe (31) of the engine (30) includes:

measuring a noise frequency of the forklift;
calculating a length of the connecting tube (200) from the volume of the cavity (100) that to derive the same resonance frequency as the noise frequency;
cutting the connecting tube (200); and
connecting the other end portion of the cut connecting tube (200) to the intake pipe (31).

**10.** The method of claim 9, wherein, in the calculating of the length of the connecting tube (200), the resonance frequency is

$$f_{\text{resonance}} = \frac{v}{2\pi}\sqrt{\frac{A}{VL}} \ [\text{Hz}]$$
,

wherein $r_{\text{esonance}}$ is the resonance frequency, v is a speed of sound, A is a cross-sectional area of the connecting tube (200), V is the volume of the cavity (100), and L is the length of the connecting tube (200).

**11.** The method of claim 10, wherein the length of the connecting tube (200) is formed in reverse proportion to the volume of the cavity (100).

**12.** The method of any one of claims from 8 to 11, further comprising installing a sound absorbing member (300) on one side of the cavity (100).

**13.** The method of any one of claims from 8 to 12, further comprising inserting a case (400) provided with an inner space into the cavity (100).

**14.** The method of claim any one of claims from 8 to 13, further comprising forming an intake port (500) communicating with an outside in the cavity (100).

**Amended claims in accordance with Rule 137(2) EPC.**

**1.** A forklift noise reduction device (10) comprising:

a cavity (100) provided inside a frame (20) of a forklift; and
a connecting tube (200) of which one end communicates with an intake pipe (31) of an engine (30) and the other end communicates with the cavity (100),
wherein a length of the connecting tube (200) is calculated from a volume of the cavity (100) that to derive the same resonance frequency as a noise frequency of the forklift; and
an intake port (500) formed to pass through the frame (20) so that the cavity (100) communicates with an outside,
wherein the intake port (500) is positioned relatively farther away from a driver's seat of the forklift than the intake pipe (31).

**2.** The forklift noise reduction device (10) of claim 1, wherein the resonance frequency is

$$f_{\text{resonance}} = \frac{v}{2\pi}\sqrt{\frac{A}{VL}} \ [\text{Hz}]$$
,

wherein $r_{\text{esonance}}$ is the resonance frequency, v is a speed of sound, A is a cross-sectional area of the connecting tube (200), V is the volume of the cavity

(100), and L is the length of the connecting tube (200).

3. The forklift noise reduction device (10) of claim 1 or 2 , further comprising a sound absorbing member (300) provided on one side of the cavity (100).

4. The forklift noise reduction device (10) of any one of claims from 1 to 3, further comprising a case (400) installed in the cavity (100) and provided with an inner space.

5. The forklift noise reduction device (10) of any one of claims from 1 to 4, further comprising a noise measurement device configured to measure the noise frequency of the forklift.

6. A method of reducing noise of a forklift, comprising:

finding a cavity (100) in a frame (20) of a forklift;
forming an intake port (500) communicating with an outside in the cavity (100);
measuring a volume of the cavity (100);
fixing one end portion of a connecting tube (200) to the frame (20) so that the one end portion communicates with the cavity (100); and
cutting the connecting tube (200) according to the volume of the cavity (100) and connecting the other end portion of the connecting tube (200) to an intake pipe (31) of an engine (30),

wherein forming the intake port (500) comprises forming the intake port (500) to pass through the frame (20) and positioning the intake port (500) at a location relatively farther away from a driver's seat of the forklift than the intake pipe (31).

7. The method of claim 6, wherein the connecting of the other end portion of the connecting tube (200) to the intake pipe (31) of the engine (30) includes:

measuring a noise frequency of the forklift;
calculating a length of the connecting tube (200) from the volume of the cavity (100) that to derive the same resonance frequency as the noise frequency;
cutting the connecting tube (200); and
connecting the other end portion of the cut connecting tube (200) to the intake pipe (31).

8. The method of claim 7, wherein, in the calculating of the length of the connecting tube (200), the resonance frequency is

$$f_{\text{resonance}} = \frac{v}{2\pi} \sqrt{\frac{A}{VL}} \ [\text{Hz}]$$

,

wherein $r_{\text{esonance}}$ is the resonance frequency, v is a speed of sound, A is a cross-sectional area of the connecting tube (200), V is the volume of the cavity (100), and L is the length of the connecting tube (200).

9. The method of any one of claims from 6 to 8, further comprising installing a sound absorbing member (300) on one side of the cavity (100).

10. The method of any one of claims from 6 to 9, further comprising inserting a case (400) provided with an inner space into the cavity (100).

FIG. 1

FIG. 2

FIG. 3

```
                        ┌──────────────┐
                        │    START     │
                        └──────┬───────┘
                               │
                               ▼
        ┌──────────────────────────────────────────────┐
        │        FIND CAVITY IN FRAME OF FORKLIFT       │──── S100
        └──────────────────────┬───────────────────────┘
                               │
                               ▼
        ┌──────────────────────────────────────────────┐
        │            MEASURE VOLUME OF CAVITY           │──── S200
        └──────────────────────┬───────────────────────┘
                               │
                               ▼
        ┌──────────────────────────────────────────────┐
        │  CONNECT ONE END PORTION OF CONNECTING TUBE   │
        │            TO FRAME SO THAT ONE END           │──── S300
        │     PORTION COMMUNICATES WITH CAVITY          │
        └──────────────────────┬───────────────────────┘
                               │
                               ▼
        ┌──────────────────────────────────────────────┐
        │    CUT CONNECTING TUBE ACCORDING TO VOLUME    │
        │    OF CAVITY AND CONNECT OTHER END PORTION    │──── S400
        │   OF CONNECTING TUBE TO INTAKE PIPE OF ENGINE │
        └──────────────────────┬───────────────────────┘
                               │
                               ▼
                        ┌──────────────┐
                        │     END      │
                        └──────────────┘
```

FIG. 4

```
            ┌─────────────┐
            │    START    │
            └──────┬──────┘
                   │
                   ▼
┌──────────────────────────────────────────┐
│       FIND CAVITY IN FRAME OF FORKLIFT    │──── S100
└──────────────────┬───────────────────────┘
                   │
                   ▼
┌──────────────────────────────────────────┐
│ INSTALL SOUND ABSORBING MEMBER ON ONE SIDE OF CAVITY │──── S1100
└──────────────────┬───────────────────────┘
                   │
                   ▼
┌──────────────────────────────────────────┐
│          MEASURE VOLUME OF CAVITY         │──── S200
└──────────────────┬───────────────────────┘
                   │
                   ▼
┌──────────────────────────────────────────┐
│ CONNECT ONE END PORTION OF CONNECTING TUBE TO FRAME │
│ SO THAT ONE END PORTION COMMUNICATES WITH CAVITY    │──── S300
└──────────────────┬───────────────────────┘
                   │
                   ▼
┌──────────────────────────────────────────┐
│  CUT CONNECTING TUBE ACCORDING TO VOLUME OF  │
│    CAVITY AND CONNECT OTHER END PORTION OF   │──── S400
│  CONNECTING TUBE TO INTAKE PIPE OF ENGINE    │
└──────────────────┬───────────────────────┘
                   │
                   ▼
            ┌─────────────┐
            │     END     │
            └─────────────┘
```

FIG. 5

```
                        ┌─────────────┐
                        │    START    │
                        └─────────────┘
                               │
                               ▼
    ┌──────────────────────────────────────────────────┐
    │        FIND CAVITY IN FRAME OF FORKLIFT           │──── S100
    └──────────────────────────────────────────────────┘
                               │
                               ▼
    ┌──────────────────────────────────────────────────┐
    │   INSERT CASE PROVIDED WITH INNER SPACE INTO      │──── S1300
    │                    CAVITY                         │
    └──────────────────────────────────────────────────┘
                               │
                               ▼
    ┌──────────────────────────────────────────────────┐
    │            MEASURE VOLUME OF CAVITY               │──── S200
    └──────────────────────────────────────────────────┘
                               │
                               ▼
    ┌──────────────────────────────────────────────────┐
    │ CONNECT ONE END PORTION OF CONNECTING TUBE TO     │
    │ FRAME SO THAT ONE END PORTION COMMUNICATES WITH   │──── S300
    │                    CAVITY                         │
    └──────────────────────────────────────────────────┘
                               │
                               ▼
    ┌──────────────────────────────────────────────────┐
    │  CUT CONNECTING TUBE ACCORDING TO VOLUME OF       │
    │  CAVITY AND CONNECT OTHER END PORTION OF          │──── S400
    │  CONNECTING TUBE TO INTAKE PIPE OF ENGINE         │
    └──────────────────────────────────────────────────┘
                               │
                               ▼
                        ┌─────────────┐
                        │     END     │
                        └─────────────┘
```

FIG. 6

```
                    ┌─────────────┐
                    │    START    │
                    └──────┬──────┘
                           │
                           ▼
┌──────────────────────────────────────────────────────┐
│           FIND CAVITY IN FRAME OF FORKLIFT             │──S100
└───────────────────────────┬──────────────────────────┘
                            │
                            ▼
┌──────────────────────────────────────────────────────┐
│  FORM INTAKE PORT COMMUNICATING WITH OUTSIDE IN CAVITY │──S1500
└───────────────────────────┬──────────────────────────┘
                            │
                            ▼
┌──────────────────────────────────────────────────────┐
│               MEASURE VOLUME OF CAVITY                 │──S200
└───────────────────────────┬──────────────────────────┘
                            │
                            ▼
┌──────────────────────────────────────────────────────┐
│ CONNECT ONE END PORTION OF CONNECTING TUBE TO FRAME    │──S300
│  SO THAT ONE END PORTION COMMUNICATES WITH CAVITY      │
└───────────────────────────┬──────────────────────────┘
                            │
                            ▼
┌──────────────────────────────────────────────────────┐
│      CUT CONNECTING TUBE ACCORDING TO VOLUME OF        │──S400
│       CAVITY AND CONNECT OTHER END PORTION OF          │
│      CONNECTING TUBE TO INTAKE PIPE OF ENGINE          │
└───────────────────────────┬──────────────────────────┘
                            │
                            ▼
                    ┌─────────────┐
                    │     END     │
                    └─────────────┘
```

FIG. 7

```
┌─────────────────────────────────────────────────┐
│         MEASURE NOISE FREQUENCY OF FORKLIFT       │──── S410
└─────────────────────────────────────────────────┘
                         │
                         ▼
┌─────────────────────────────────────────────────┐
│            CALCULATE LENGTH OF CONNECTING         │
│  TUBE FROM VOLUME OF CAVITY THAT TO DERIVE SAME   │──── S420
│     RESONANCE FREQUENCY AS NOISE FREQUENCY        │
└─────────────────────────────────────────────────┘
                         │
                         ▼
┌─────────────────────────────────────────────────┐
│               CUT CONNECTING TUBE                 │──── S430
└─────────────────────────────────────────────────┘
                         │
                         ▼
┌─────────────────────────────────────────────────┐
│            CONNECT OTHER END PORTION OF           │
│        CUT CONNECTING TUBE TO INTAKE PIPE         │──── S440
└─────────────────────────────────────────────────┘
```

Europäisches
Patentamt
European
Patent Office
Office européen
des brevets

# EUROPEAN SEARCH REPORT

**Application Number**

EP 24 21 3891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 161215 A (TOYOTA IND CORP) 6 June 2003 (2003-06-06) * paragraph [0010] - paragraph [0024]; figures 1-5 * | 1-14 | INV. F02M35/12 |
| X | CN 106 150 794 A (ANHUI HELI CO LTD) 23 November 2016 (2016-11-23) * paragraph [0023] - paragraph [0028]; figures 1, 2, 4 * | 1-14 | |
| X | EP 1 481 834 A2 (MITSUBISHI HEAVY IND LTD [JP]; NISSAN MOTOR [JP]) 1 December 2004 (2004-12-01) * paragraph [0023] - paragraph [0048]; figures 1-4, 7 * | 1-14 | |
| A | EP 3 757 380 A1 (HS R & A CO LTD [KR]) 30 December 2020 (2020-12-30) * paragraph [0025] - paragraph [0031]; figure 1 * | 1-3,8, 10,11 | |
| | | | **TECHNICAL FIELDS SEARCHED (IPC)** F02M |

The present search report has been drawn up for all claims

| Place of search | Date of completion of the search | Examiner |
|---|---|---|
| Munich | 4 April 2025 | Rauch, Vincent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 682 374 A1

## ANNEX TO THE EUROPEAN SEARCH REPORT
## ON EUROPEAN PATENT APPLICATION NO.

EP 24 21 3891

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | | | Publication date | Patent family member(s) | | | Publication date |
|---|---|---|---|---|---|---|---|
| JP 2003161215 | A | | 06-06-2003 | NONE | | | |
| CN 106150794 | A | | 23-11-2016 | NONE | | | |
| EP 1481834 | A2 | | 01-12-2004 | CA | 2466830 | A1 | 30-11-2004 |
| | | | | CN | 1572710 | A | 02-02-2005 |
| | | | | CN | 1966294 | A | 23-05-2007 |
| | | | | EP | 1481834 | A2 | 01-12-2004 |
| | | | | ES | 2320760 | T3 | 28-05-2009 |
| | | | | JP | 2004353610 | A | 16-12-2004 |
| | | | | KR | 20040103471 | A | 08-12-2004 |
| | | | | TW | I282774 | B | 21-06-2007 |
| | | | | US | 2005022772 | A1 | 03-02-2005 |
| EP 3757380 | A1 | | 30-12-2020 | EP | 3757380 | A1 | 30-12-2020 |
| | | | | KR | 102089462 | B1 | 27-04-2020 |
| | | | | US | 2020408178 | A1 | 31-12-2020 |

EPO FORM P0459

For more details about this annex : see Official Journal of the European Patent Office, No. 12/82

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240094031